# EUROPEAN PATENT APPLICATION

(11) **EP 1 921 434 A2**
(43) Date of publication of application: **14.05.2008**
(21) Application number: 07251835.0
(22) Date of filing: 01.05.2007
(51) Int. Cl.: G01N 1/32

(54) **Apparatus and method for preparing cross-sectional specimen using ion beam**

(30) Priority: 19.06.2006 JP 2006168912
(71) Applicant: JEOL Ltd., Akishima, Tokyo 196-8558 (JP)
(72) Inventor: Todoroki, Kouji, Tokyo, 197-0003 (JP); Miyao, Hirofumi, Tokyo, 190-0144 (JP)
(74) Representative: Cross, Rupert Edward Blount

(57) **Abstract**

A cross-sectional specimen preparation apparatus and method using an ion beam (IB) and a shielding material (12) and permitting quick and easy judgment of the progress of ion beam milling. The milling position can be modified or corrected in a short time. Also, the internal structure of the specimen (6) can be known. The apparatus has an optical observation device (40) for observing a cross section of the specimen milled by the ion beam. During ion beam irradiation or when the irradiation is interrupted, a shutter (41) is opened. The cross section of the specimen can be observed while maintaining the vacuum inside a processing chamber (18). The apparatus further includes an adjusting mechanism (5,10) for varying the relative position between the specimen and the shielding material. Whenever one sectioning operation ends, an image of the cross section is accepted and the milling position is moved an incremental distance. These operations are repeated. A three-dimensional image of the specimen is constructed from obtained plural images.

## Description

### BACKGROUND OF THE INVENTION

### 1. Field of the Invention

The present invention relates to an apparatus capable of preparing a smooth and clean cross-sectional specimen using an ion beam and a shielding material.

### 2. Description of the Related Art

For example, when a failure analysis of the inside of a semiconductor device is performed, it is customary to section a defective area using a focused ion beam (FIB). Then, the section is observed with a scanning electron microscope (SEM) or transmission electron microscope (TEM). Sectioning using FIB has the disadvantage that the specimen is destroyed. Techniques compensating for the drawback with the FIB technique described above and resulting in sections adapted for observation and techniques permitting one to know the three-dimensional structure of a defective portion are disclosed, for example, in Japanese patent Laid-Open No.H6-20638 and Japanese Patent Laid-Open No.HB-115699.

Specimens that are sectioned and observed under a SEM or TEM include many difficult-to-section specimens (e.g., soft specimens, thermally vulnerable specimens, water absorptive specimens, and specimens that cannot be easily resin encapsulated), in addition to semiconductor specimens. Microtomy and freeze sectioning have been heretofore used as methods of sectioning specimens as described above. In the freeze sectioning, frozen specimens are sectioned. Microtomy techniques including cryomicrotomy techniques are widely accepted methods. With these techniques, however, a specimen surface is cut with a knife of glass or diamond. Therefore, it may be difficult to maintain the original shape depending on the specimen. Furthermore, sophisticated skill is required to prepare an accurate section. Cryomicrotomy is a method of cutting a specimen that has been cooled cryogenically using liquid nitrogen or the like. However, it cannot be said that a cross section is obtained at a desired position at all times. The surface is not smooth although the cleanliness of the surface is maintained.

Therefore, in the case of a relatively small specimen of less than tens of micrometers, a cryo-FIB technique is used. In this technique, a frozen specimen is irradiated with a focused ion beam (FIB) to section the specimen. However, with cryo-FIB, it is substantially difficult to prepare a large specimen section of more than hundreds of microns. Therefore, a method using a cross section polisher has been employed (see, for example, Japanese patent No. 3263920). In particular, a shielding material is placed over a specimen. The specimen is irradiated with an ion beam that is not focused but is kept broad. It is said that with this method using the cross section polisher, a good cross section can be obtained especially from a composite material consisting of different materials differing in hardness or from a porous material with less structural variations than where an FIB method is used. Furthermore, it is easier to perform the pretreatment than the FIB method. Also, any work requiring skillfulness is not necessary. Consequently, there is the advantage that a cross section can be prepared easily in a short time.

Japanese Patent Laid-Open No. 2005-37164 discloses a technique that is an improvement over the specimen preparation apparatus of Japanese patent Laid-Open No. H6-20638. This disclosed technique pertains to an apparatus equipped with an optical microscope for adjusting the position at which sectioning is done. A related-art sectioning technique is described briefly below with reference to Japanese Patent Laid-Open No. 2005-37164.

To facilitate understanding the description, mutually perpendicular coordinate axes X, Y, and Z are defined and shown in the drawings. The arrow indicated by the symbol ⊗ is directed from front side to rear side of the paper.

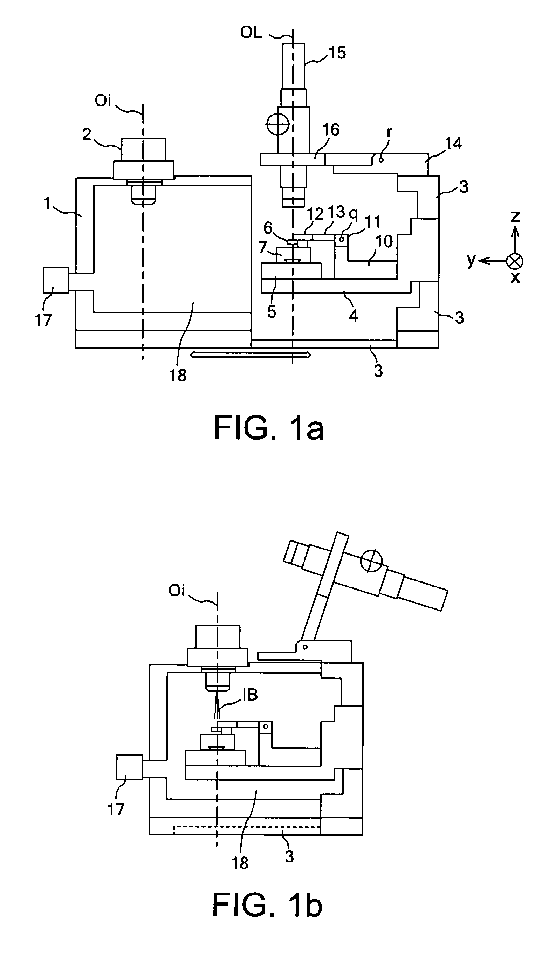

Figs. 1a and 1b schematically show the structure of a cross-sectional specimen preparation apparatus. An ion gun 2 forming an ion beam irradiation device is mounted on top of a vacuum chamber 1. The gun 2 emits an ion beam IB whose center axis Oi is substantially parallel to the Z-axis. A specimen stage pullout mechanism 3 is mounted to the vacuum chamber 1 such that the mechanism can be opened and closed.

In Fig. 1a, the specimen stage pullout mechanism 3 is open (has been pulled out). In Fig. 1b, the mechanism is closed. When the pullout mechanism 3 is closed, a processing chamber 18 is evacuated by a pumping system 17. A specimen stage 4 is mounted to the stage pullout mechanism 3 so as to be tiltable about the Y-axis. A specimen position-adjusting mechanism 5 is disposed on the specimen stage 4 and capable of moving a specimen holder 7 mounted on the specimen position-adjusting mechanism 5 and a specimen 6 placed on the specimen holder 7 in the X- and Y-directions. A shielding material 12 held to a shielding material-holding mechanism 13 is tiltably mounted to a shielding material-tilting mechanism 11. The shielding material-holding mechanism 13 capable of rotating about a shaft q extending parallel to the X-axis can retract the shielding material 12 from over the specimen 6. A shielding material position-adjusting mechanism 10 is disposed on the specimen stage 4 and can move in the Y-direction. An optical microscope position-adjusting mechanism 16 holding an optical microscope 15 is tiltably mounted to an optical microscope-tilting mechanism 14.

As shown in Fig. 1b, in a case where the specimen stage pullout mechanism 3 is closed, the optical microscope 15 and optical microscope position-adjusting mechanism 16 rotate about a shaft *r* extending parallel to the X-axis and move out of the vacuum chamber 1.

A procedure performed with the cross-sectional specimen preparation apparatus of the structure shown in Figs. 1a and 1b to determine the milling position prior to preparation of a cross section is briefly described. First, the specimen stage pullout mechanism 3 is closed, and the processing chamber 18 is evacuated to a vacuum to obtain the state shown in Fig. 1b. Under this condition, the specimen 6 is irradiated with the ion beam IB for a given time to create a beam trace at an arbitrary position on the surface of the specimen 6. Then, the pullout mechanism 3 is opened to expose the inside of the processing chamber 18 to the atmosphere, obtaining the state shown in Fig. 1a. Under this condition, the optical microscope position-adjusting mechanism 16 is manipulated to adjust the position of the optical microscope 15 such that the beam trace comes into the center of the field of view of the optical microscope 15. In this way, the optical axis OL of the microscope 15 can be brought into coincidence with the ion beam irradiation axis Oi.

Subsequently, the operator manipulates a shielding material Y-motion knob (not shown) mounted on the shielding material position-adjusting mechanism 10 while observing the shielding material 12 with the optical microscope 15, in order to bring an edge portion of the shielding material 12 onto the optical axis OL. Then, the operator manipulates a specimen X-motion knob (not shown) and a specimen Y-motion knob (not shown) mounted on the specimen position-adjusting mechanism 5 while observing the specimen 6 with the optical microscope 15 such that a position of the specimen 6 at which a cross section is prepared is placed immediately under the edge portion of the shielding material 12.

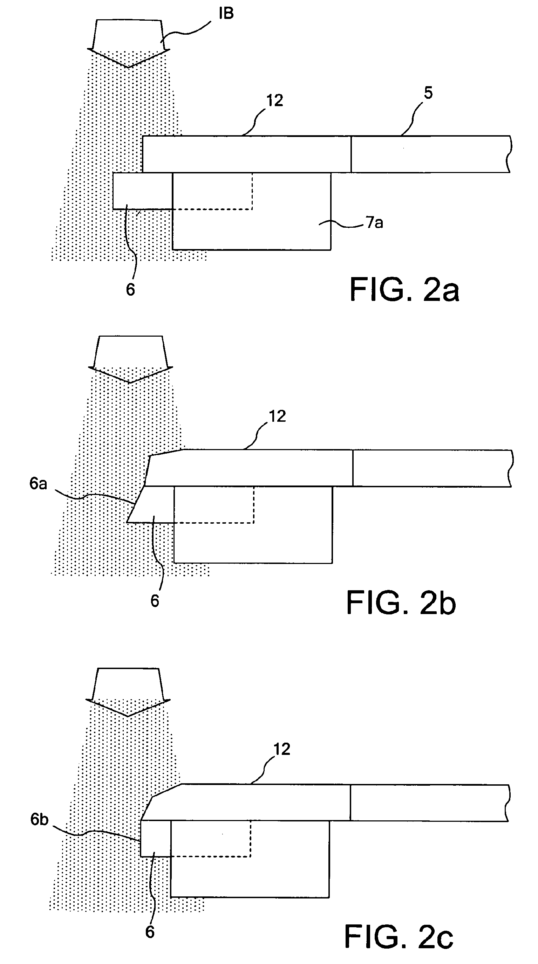

After determining the position where a cross section is prepared as described above, the specimen stage pullout mechanism 3 is again closed and the inside of the processing chamber 18 is evacuated to a vacuum to regain the state of Fig. 1b. The ion beam IB is directed at the specimen to prepare a section. Figs. 2a, 2b and 2c show the manner in which the portion of the specimen 6 not shielded by the shielding material is gradually milled away by the irradiation by the ion beam IB, resulting in a section. Fig. 2a shows the state obtained immediately after the start of the milling, while Fig. 2b shows the state in which the milling is in progress. Fig. 2c shows the state in which preparation of a cross section has been already completed.

The optical microscope disclosed in Japanese Paten Laid-Open No. 2005-37164 is only used when the positions of the shielding material and specimen are adjusted to determine a position where a cross section is prepared. Therefore, it is impossible to observe the cross section being milled by ion beam irradiation. It cannot be known as to whether a desired cross section has been obtained until the processing chamber is exposed to the atmosphere after completion of the processing. If the milling is not sufficient, the processing must be repeated after readjusting the positions of the specimen and shielding material. If overmilling occurs, it is necessary that the specimen itself will be replaced by another specimen and the processing be redone. That is, with the related-art cross-sectional specimen preparation apparatus using a cross section polisher, the positions of the specimen and shielding material cannot be adjusted during milling or the processing is interrupted. Even if the positions could be adjusted, there remains the problem that no appropriate adjustment can be made because any device for observing the section being milled is not equipped.

As described previously, the size of sections prepared using FIB is about tens of microns at best. It is practically impossible to prepare cross sections of more than hundreds of microns. Accordingly, where a specimen is milled in round slices from an end portion of the specimen to know the internal structure of the specimen, if the specimen is so large that FIB cannot be used, it is necessary to repeat several times very cumbersome operations including preparation of cross sections by microtomy and observation of the cross sections by SEM. With the method using a cross section polisher, a large cross section can be prepared in one milling operation with an ion beam. However, the related-art cross-sectional preparation apparatus has the problem that the apparatus has neither a function of adjusting the positions of specimen and shielding material during sectioning or when the sectioning is interrupted nor a function of observing the section.

### SUMMARY OF THE INVENTION

The present invention has been made in view of the foregoing circumstances. It would be desirable to provide a cross-sectional specimen preparation apparatus which prepares a section of a specimen using a cross section polisher and which has a function of adjusting the positions of the specimen and a shielding material during sectioning of the specimen or when the sectioning is interrupted and an observation function to thereby permit an operator to judge the progress of the sectioning quickly and easily. Consequently, the operator can quickly modify or correct the position at which the section is prepared.

It would also be desirable to provide a cross-sectional specimen preparation apparatus which prepares a section of a specimen using a cross section polisher and which has a function of adjusting the positions of the specimen and a shielding material during sectioning of the specimen or when the sectioning is interrupted and an observation function to thereby acquire images of plural large cross sections of more than hundreds of microns which are normally difficult to mill by FIB. Consequently, information about the three-dimensional structure inside the specimen can be obtained.

A first embodiment of the present invention that addresses the above-described problems provides a cross-sectional specimen preparation apparatus which prepares a cross section of a specimen by covering a part of the specimen with a shielding material and directing an ion beam at the specimen from the side of the shielding material including an edge portion of the shielding material to mill away the unshielded portion of the specimen with the ion beam. This preparation apparatus has (i) ion beam irradiation device mounted in a vacuum chamber and acting to direct the ion beam at the specimen, (ii) a position-adjusting mechanism housed inside the vacuum chamber and used to adjust the relative position between the edge portion of the shielding material and the specimen, and (iii) motion control device permitting one to control movement of the position of the position-adjusting mechanism from outside the vacuum chamber. A corresponding method is also provided.

A second embodiment of the present invention is based on the first embodiment and further characterized in that the position-adjusting mechanism has at least one of a shielding material position-adjusting mechanism for moving the position of the shielding material relative to the specimen to adjust the position where the cross section is prepared and a specimen-moving mechanism for moving the position of a specimen holder carrying the specimen thereon relative to the shielding material.

A third embodiment of the invention is based on the first or second embodiment and further characterized in that the movement control device has position recognition mechanism capable of recognizing the amount of variation in the relative position between the specimen and the shielding material.

A fourth embodiment of the invention is based on any one of the first through third embodiments and further characterized in that the position recognition mechanism has at least one of a linear scale, a linear encoder, and an optical encoder.

A fifth embodiment of the invention is based on any one of the first through fourth embodiments and further characterized in that there is further provided cross section observation device capable of observing a cross section of the specimen when the sample is being irradiated with the ion beam for sectioning or when the irradiation is interrupted.

A sixth embodiment of the invention is based on any one of the first through fifth embodiments and further characterized in that the cross section observation device has at least one of optical image observation device, secondary electron image observation device, backscattered electron image observation device, and infrared radiation distribution map observation device.

A seventh embodiment of the invention is based on any one of the first through sixth embodiments and further characterized in that a shutter capable of being opened and closed from outside the vacuum is mounted between the observation device and the cross section of the specimen.

An eighth embodiment of the invention is based on any one of the first through seventh embodiments and further characterized in that there is further provided image acceptance device capable of accepting a cross-sectional image obtained by the observation device as two-dimensional digital data.

A ninth embodiment of the invention is based on any one of the first through eighth embodiments and further characterized in that there is further provided image processing device for building a three-dimensional image from plural images accepted by the image acceptance device.

According to the first embodiment, the relative position between the specimen and the shielding material can be adjusted when the cross section is being milled or when the milling is interrupted while maintaining the vacuum in the vacuum chamber. Consequently, the position of the milled surface can be modified or corrected minutely, quickly, and easily.

According to the second embodiment, the position where the cross section is prepared can be adjusted by manipulating at least one of the shielding material position-adjusting mechanism and the specimen-moving mechanism and, therefore, the position of the milled surface can be modified or corrected minutely, quickly, and easily.

According to the third embodiment, there is provided the position recognition mechanism capable of recognizing the absolute positions of the specimen and shielding material or the relative position between the specimen and the shielding material. Therefore, the position at which the cross section is prepared can be adjusted minutely and precisely.

According to the fourth embodiment, the position recognition mechanism has at least one of a linear scale, a linear encoder, and an optical encoder. Therefore, the relative position between the specimen and the shielding material can be varied accurately.

According to the fifth embodiment, the state of the cross section of the specimen being milled can be quickly grasped and so the results of the minute variation in the position of the milled surface can be accurately judged.

According to the sixth embodiment, the cross section observation device has at least one of optical image observation device, secondary electron image observation device, backscattered electron image observation device, and infrared radiation distribution map (infrared thermography image) observation device. Consequently, cross-sectional information of a kind complying with the object can be obtained.

According to the seventh embodiment, the shutter designed to be capable of being opened and closed from outside the vacuum is mounted between the observation device and the cross section of the specimen. Consequently, particles flying off from the specimen and shielding material due to ion beam irradiation can be prevented from adhering to the observation device; otherwise, the observation function would be damaged.

According to the eighth embodiment, there is provided the image acceptance device capable of accepting a cross-sectional image obtained by the observation device as two-dimensional digital data into a computer. Consequently, images of the cross section being milled can be accepted in succession.

According to the ninth embodiment, there is provided the image processing device for building a three-dimensional image from plural images. Consequently, information about the three-dimensional structure of the portion milled by the ion beam can be obtained.

Other preferred embodiments of the invention will appear in the course of the description thereof, which follows.

### BRIEF DESCRIPTION OF THE DRAWINGS

Figs. 1a and 1b show schematic side elevations showing the structure of a related-art cross-sectional specimen preparation apparatus.
Figs. 2a, 2b and 2c show schematic views illustrating the manner in which a cross section is milled with a cross section polisher.
Fig. 3 is a schematic block diagram of the structure of a cross-sectional specimen preparation apparatus according to one embodiment of the present invention.
Fig. 4 illustrates the concept of the present invention.
Fig. 5 is a flowchart illustrating a procedure for making an observation of a section during milling in accordance with one embodiment of the invention.
Fig. 6 is a flowchart illustrating another procedure performed when plural cross-sectional images are accepted in accordance with one embodiment of the invention.

### DESCRIPTION OF THE PREFERRED EMBODIMENTS

Embodiments of the present invention are hereinafter described with reference to the accompanying drawings. Like components are indicated by like reference numerals in various figures including Figs. 1a and 1b already referenced. Those components that are already described will not be described below to avoid repeated description. A structure added by the embodiments of the present invention is described hereinafter. It is to be noted that the technical scope of the present invention is not limited to exemplary embodiments shown below.

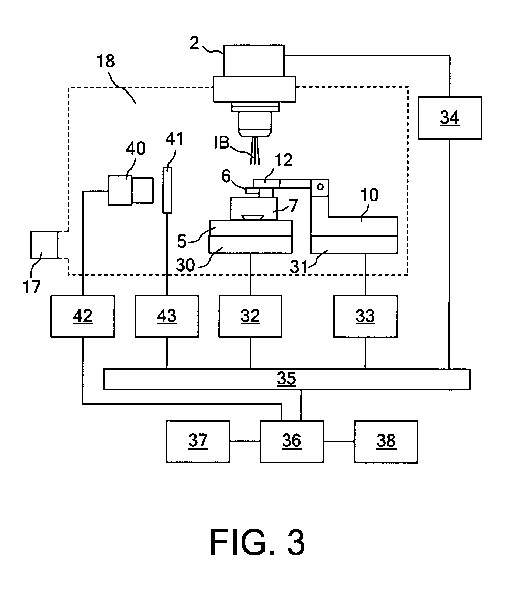

An example of structure of a cross-sectional specimen preparation apparatus embodying the present invention is schematically shown in Fig. 3. In this figure, actuators 30 and 31 drive the specimen position-adjusting mechanism 5 and the shielding material position-adjusting mechanism 10, respectively. Each actuator 30 and 31 is controlled by each controller 32 and 33, respectively. Another controller 34 controls the ion beam emitted from the ion gun 2. An optical observation device 40 constituting a cross section observation device sends image data to an arithmetic and control unit 36 via an image acceptance device 42. A shutter 41 having an opening-closing mechanism is mounted to prevent the optical observation device from being contaminated by particles flying off from the specimen 6 and shielding material 12 due to ion beam irradiation. The shutter 41 is opened and closed under control of a controller 43. The controllers 32, 33, 34, and 43 are connected with the arithmetic and control unit 36 via an interface 35. A display device 37 is made of a CRT (cathode-ray tube) or liquid crystal monitor. An input device 38 is made of a computer mouse or a keyboard.

Although not shown in Fig. 3, the specimen position-adjusting mechanism 5 and the shielding material position-adjusting mechanism 10 are disposed on the specimen stage 4 together with the actuators 30 and 31 and mounted to the vacuum chamber 1 such that the mechanisms 5 and 10 can be opened and closed by the specimen stage pullout mechanism 3 in the same way as in the related-art apparatus shown in Figs. 1a and 1b.

To permit the relative position between the specimen 6 and the shielding material 12 to be changed accurately, one of a linear scale, a linear encoder, and an optical encoder is preferably built in at least one of the specimen position-adjusting mechanism 5 and the shielding material position-adjusting mechanism 10. The incorporation of the digital control device makes it possible to accurately recognize and control the amount of movement of the relative position between the specimen 6 and the shielding material 12 when the relative position is varied minutely.

The arithmetic and control unit 36 controls the controllers, which in turn control the cross-sectional specimen preparation apparatus. The unit 36 is loaded with a software program for creating a three-dimensional image from plural two-dimensional images. The software program constitutes an image processing device. The image processing can be performed by a dedicated device separated from the arithmetic and control unit 36.

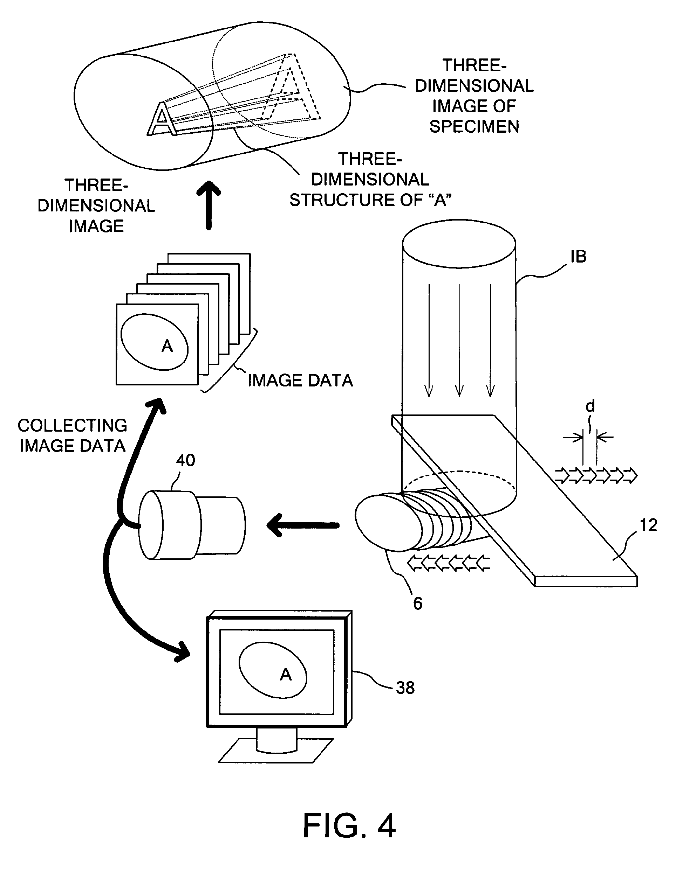

Fig. 4 schematically illustrates the concept of the present invention. A pattern "A" appears on the cross section of the specimen 6 milled by an ion beam B. During the ion beam irradiation or when the irradiation is interrupted, image data obtained by the optical observation device 40 constituting the cross section observation device is sent to the display device 38. The cross section of the specimen 6 can be observed at all times. Information about the three-dimensional structure of "A" present inside the specimen 6 can be obtained by varying the relative position between the shielding material 12 and the specimen 6 in steps of d, collecting image data whenever milling is completed at each position, and constructing a three-dimensional image from the image data about the plural images.

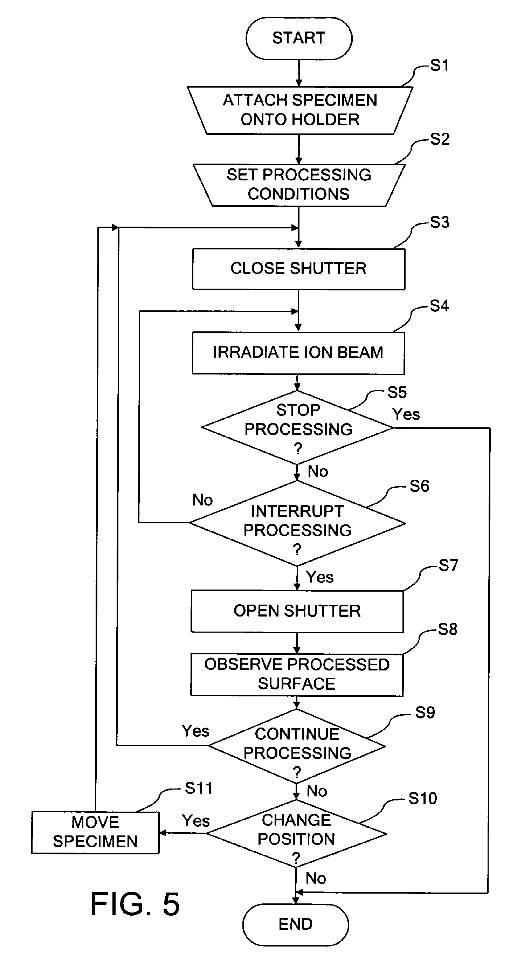

A procedure for quickly and easily judging the progress of a sectioning process performed by the cross-sectional specimen preparation apparatus shown in Fig. 3 and according to an embodiment of the present invention and quickly modifying the position at which a cross section is created is next described by referring to the flowchart of Fig. 5.

In step S1, the specimen stage pullout mechanism 3 is opened. Under this condition, the operator attaches a specimen from which a section is created onto the specimen holder 7. The position at which the cross section is created is adjusted. After completion of the adjustment, the stage pullout mechanism 3 is closed. The processing chamber 18 is evacuated to a degree of vacuum necessary for ion beam irradiation by the pumping system 17.

In step S2, the operator sets processing conditions including the accelerating voltage of the ion beam IB, ion current, and processing time by entering instructions regarding them from the input device 38.

In step S3, the arithmetic and control unit 36 closes the shutter 41 via the controller 43 to prevent contamination of the optical observation device.

In step S4, the arithmetic and control unit 36 directs the ion beam IB at the portion of the specimen 6 not shielded by the shielding material 12 via the controller 34.

In step S5, the irradiation by the ion beam IB is continued until the specified processing time has passed or an instruction for stopping the processing is given from the operator.

In step S6, the irradiation by the ion beam IB is continued until an instruction for interrupting the processing is given from the operator.

In step S7, if an instruction for interrupting the irradiation is given, the arithmetic and control unit 36 stops the ion gun 2 from emitting the ion beam IB via the controller 34 and opens the shutter 41 via the controller 43.

In step S8, the operator observes the milled surface of the specimen 6 displayed on the display device 37 using the optical observation device 40. The milled surface of the specimen 6 is illuminated with light by lighting (not shown).

In step S9, the operator makes a decision based on the results of observation of the milled surface as to whether or not the milling of the section is continued. If the decision is affirmative (the milling is continued intact), control returns to step S3.

In step S 10, if the milling is not continued, the operator makes a decision as to whether or not the milling position is changed. If the milling position is not varied, the process is terminated intact.

In step S11, if the milling position is varied, the specimen position-adjusting mechanism 5 or shielding material position-adjusting mechanism 10 is controlled by the input device 38 to slightly move the relative position between the specimen 6 and the shielding material 12. Then, control returns to step S3.

In the above-described procedure, the shutter 41 is always closed during ion beam irradiation. Alternatively, the shutter 41 may be opened according to the need even during the ion beam irradiation to permit observation of the milled surface.

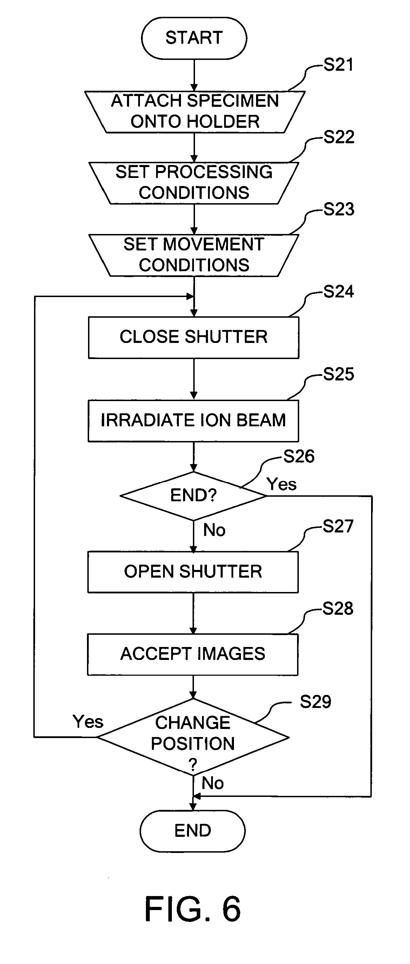

A procedure for obtaining plural cross-sectional images to obtain information about the internal structure of the specimen 6 by the cross-sectional specimen preparation apparatus shown in Fig. 3 is next described by referring to the flowchart of Fig. 6.

In step S21, when the specimen stage pullout mechanism 3 is open, the operator attaches a specimen to be cross-sectioned onto the specimen holder 7 and adjusts the position where the cross section is prepared. After completion of the adjustment, the stage pullout mechanism 3 is closed. The processing chamber 18 is evacuated by the pumping system 17 to a degree of vacuum necessary for ion beam irradiation.

In step S22, the operator enters processing conditions such as the accelerating voltage of the ion beam IB, ion current, and milling time to create one cross section from the input device 38 and sets these conditions.

In step S23, the operator specifies the magnitude d of each incremental movement, the number of times the position is varied, and mechanism to be controlled for position movement (specimen 6 or shielding material 12) by entering them from the input device 38 to collect plural cross-sectional images.

In step S24, the arithmetic and control unit 36 closes the shutter 41 via the controller 43 to prevent contamination of the optical observation device.

In step S25, the arithmetic and control unit 36 instructs the controller 34 to direct the ion beam IB at the portion of the specimen 6 not shielded by the shielding material 12.

In step S26, if an instruction for ending the process is given from the operator, the irradiation by the ion beam IB is stopped. The operation for collecting cross-sectional images is ended.

In step S27, after a lapse of the milling time to prepare one cross section, the arithmetic and control unit 36 instructs the controller 34 to stop the ion gun 2 from emitting the ion beam IB. The arithmetic and control unit 36 opens the shutter 41 via the controller 43.

In step S28, the image acceptance device 42 accepts cross-sectional images of the specimen 6 from the optical observation device 40 and sends them to the arithmetic and control unit 36.

In step S29, control returns to step S24 until the specified number of position changes and acceptance of the cross-sectional images at those positions are completed. The milling operation and the operation for acquiring cross-sectional images are continued.

In the above-described procedure, the shutter 41 is always closed during ion beam irradiation. According to the need, the shutter 41 may be opened even during ion beam irradiation to permit one to observe the milled surface. Furthermore, the work may be terminated before it is completed according to an operator's instruction without previously specifying the number of position changes. In addition, the magnitudes *d* of the specified incremental movements may not be always required to be uniform.

In the embodiment of the present invention described so far, cross sections of a specimen are observed with the optical observation device. It is to be noted that the observation device for observing cross sections of specimens are not restricted to optical observation devices. For example, a small-sized electron gun, a secondary electron detector and/or a backscattered electron detector are built into the processing chamber. When the ion beam irradiation is interrupted, the secondary electron image and/or backscattered electron image may be observed. Additionally, infrared detectors, for example, may be incorporated and an infrared radiation distribution map (infrared thermography image) may be observed. Further, plural ones of optical image, secondary electron image, backscattered electron image, and infrared radiation distribution map may be made simultaneously observable.

As described so far, when a cross section is created using a cross section polisher, the progress of sectioning can be quickly and easily judged by providing the function of adjusting the positions of the specimen and shielding material when the cross section is being milled or when the milling is interrupted, as well as the observation function. Consequently, the milling position can be modified or corrected in a short time. Additionally, information about the three-dimensional structure inside the specimen can be obtained by providing the two functions (i.e., the function of adjusting the positions of the specimen and shielding material when the cross section is being milled or when the milling is interrupted and the observation function) and by acquiring cross-sectional images of plural large cross sections of more than hundreds of micrometers which are difficult to mill by FIB.

## Claims

1. A cross-sectional specimen preparation apparatus for preparing a cross section of a specimen by covering a part of the specimen with a shielding material and directing an ion beam at the specimen from a side of the shielding material including an edge portion of the shielding material to mill away the unshielded portion of the specimen with the ion beam, said cross-sectional specimen preparation apparatus comprising:
(i) ion beam irradiation means mounted in a vacuum chamber and acting to direct the ion beam at the specimen;
(ii) a position-adjusting mechanism housed inside the vacuum chamber and acting to adjust a relative position between the edge portion of the shielding material and the specimen; and
(iii) motion control means permitting one to control movement of the position of the position-adjusting mechanism from outside the vacuum chamber.

2. A cross-sectional specimen preparation apparatus as set forth in claim 1, wherein said position-adjusting mechanism has at least one of a shielding material position-adjusting mechanism for moving the position of the shielding material relative to the specimen to adjust the position where the cross section is prepared and a specimen-moving mechanism for moving the position of a specimen holder carrying the specimen thereon relative to the shielding material.

3. A cross-sectional specimen preparation apparatus as set forth in any one of claims 1 and 2, wherein said movement control means has position recognition means capable of recognizing amounts of variation in the relative position between the specimen and the shielding material.

4. A cross-sectional specimen preparation apparatus as set forth in any one of claims 1 to 3, wherein said position recognition means has at least one of a linear scale, a linear encoder, and an optical encoder.

5. A cross-sectional specimen preparation apparatus as set forth in any one of claims 1 to 4, wherein there is further provided cross section observation means capable of observing a cross section of the specimen when the sample is being irradiated with the ion beam for sectioning or when the irradiation is interrupted.

6. A cross-sectional specimen preparation apparatus as set forth in any one of claims 1 to 5, wherein said cross section observation means has at least one of optical image observation means, secondary electron image observation means, backscattered electron image observation means, and infrared radiation distribution map observation means.

7. A cross-sectional specimen preparation apparatus as set forth in any one of claims 1 to 6, wherein a shutter designed to be capable of being opened and closed from outside vacuum is mounted between the observation means and the cross section of the specimen.

8. A cross-sectional specimen preparation apparatus as set forth in any one of claims 1 to 7, wherein there is further provided image acceptance means capable of accepting a cross-sectional image obtained by the observation means as two-dimensional digital data.

9. A cross-sectional specimen preparation apparatus as set forth in any one of claims 1 to 8, wherein there is further provided image processing means for building a three-dimensional image from plural images accepted by the image acceptance means.

10. A method of preparing a cross section of a specimen in a vacuum chamber, the method comprising the steps of:
covering a part of the specimen with a shielding material;
directing an ion beam from an ion beam irradiation device mounted in the vacuum chamber at the specimen from a side of the shielding material including an edge portion of the shielding material to mill away the unshielded portion of the specimen with the ion beam; and
adjusting the relative position between the edge portion of the shielding material and the specimen using a position-adjusting mechanism housed inside the vacuum chamber,
wherein movement of the position of the position-adjusting mechanism is controlled from outside the vacuum chamber with a motion control device.
